# EUROPEAN PATENT APPLICATION

(11) **EP 3 118 584 A1**
(43) Date of publication of application: **18.01.2017**
(21) Application number: 15075039.6
(22) Date of filing: 30.11.2015
(51) Int. Cl.: G01D 4/00, G06Q 50/06, H04L 29/08, G01R 21/133

(54) **PROCESSING SYSTEM FOR STANDARDIZATION AND ABSTRACTION OF REGISTERS MEASURED BY AN ARRAY OF MEASURING DEVICES OF PHYSICAL MAGNITUDES**

(30) Priority: 13.07.2015 ES 201531021
(71) Applicant: Iberia Technologies Integrated Solutions, S.L.U., 28023 Madrid (ES)
(72) Inventor: Gonzalez Gonzalez, Juan, 28023 Madrid (ES); Polo Vera, Gonzalo, 28023 Madrid (ES); Budia Sanchez, Ernesto, 28023 Madrid (ES); Marcos Vazquez, Juan Antonio, 28023 Madrid (ES); Cordon Ballesteros, Javier, 28023 Madrid (ES); Fernandez Alvarez, Raul, 28023 Madrid (ES); Nuñez Martin, Miguel Angel, 28023 Madrid (ES)
(74) Representative: Tari Lazaro, Aida

(57) **Abstract**

Processing system for standardization and abstraction of registers measured by measuring devices (1), which comprise processing means of measured registers (5) received for generating processed registers (5a) storable in a storage database (6) of processed registers, characteristics schemes (7a) of separate models of measuring device (1), which comprise at least one module (9) and at least one submodule (10) assigned to the said module (9) on the basis of its functioning mode (17a), each module (9) being allotted to at least one memory position of a measuring device model (1), associated with a single measuring point and assigned to at least one category map (8a) in which a submodule (10) is related to a category variable, with assignment tables (16) of category variables, mapping means (11) with assignment means (12) and transformation means (13) provided for transforming values of each measured register (1 a) into values of processed registers (5a), expressed in the pre-established equivalent unit of measurement assigned to the corresponding submodule (10). The assignment means (12) are designed for assigning to each measured register (1a) read in the memory position (18a) corresponding to a submodule (10), the category variable with which the submodule is related in the assignment table (16).

## Description

### TECHNICAL FIELD OF THE INVENTION

The present invention belongs to the field of processing systems for registers measured by means of measuring devices of physical magnitudes related to supplies such as electrical supplies, fuel supplies, water supplies, heat supplies, cold supplies and combinations thereof, for installations and buildings.

### STATE OF THE ART PRIOR TO THE INVENTION

Nowadays, management systems for installations, such as industrial installations, homes and office buildings, shopping centers, public buildings, etc. are taking on an ever-increasirig relevance.

In these energy management systems, exact control over the supplies of electricity, thermal energy (hot or cold), water, fuel (for example, fuel oil or gas) provided for the various energy consuming apparatus and devices is of utmost importance. For this control, it is in turn very important that the measurements that are made of the values representing the ambient conditions that are wished to be maintained or achieved in the building or the installation, such as for example temperature, light level, quality of the air, etc., are as exact as possible, both for the purpose of momentary conditioning and for the purpose of supervising the energy efficiency in the medium and long term.

In addition to the exactitude of the measurements as such, it also is very important that they can be processed by the computing systems that form part of the energy management systems. Nevertheless, for processing the measurements, the energy system usually has to communicate with measuring devices from different manufacturers and from very different models, which can be due, on the one hand, it is wished to exploit measuring devices already existing in the building or installation, and, on the other hand, to the rapid evolution in measuring devices.

In a conventional energy management system, there exist arrangements of measuring devices where each measuring device that is installed represents a measuring point, and on the basis of the storage data for the system there exists just the object "measuring device" which is fully equivalent to the concept "measuring point".

The registers of each model of measuring device are interrogated and read by means of a specific protocol adapted to that measuring device in particular via a physical medium connected to one or several physical memory positions of the measuring device which deliver values of measured registers of physical magnitudes. The measured register that is delivered in each memory position is expressed as a value of a predetermined unit of measurement. The type of value and the predetermined unit of measurement for the registers that are delivered in each memory position are known, for example, on the basis of a table of memory positions of the measuring device.

Given that the measuring device is designed simply as a physical device, the registers of the measuring device are grouped into a set corresponding to the value delivered by the measuring device itself and are stored on the storage database with that delivered value, without the possibility of the registers being able to be grouped in any other way. As there does not exist an established standard in that regard, each model of measuring device is designed for registering the physical magnitude to be measured in a different way. Thus, in order to measure the same physical magnitude, a model of measuring device can represent the values with a floating point register that may be positive or negative and another model can do this with two positive registers using one or the other according to the sign of the actual physical magnitude that is measured.

The heterogeneity of the measuring devices means that the energy management systems normally used can be communicated and operate within a narrow range of models of measuring devices, and that problems arise when it is wished to adapt the energy management system to other models of measuring devices.

It was therefore desirable to create a functioning structure that would solve these problems, permitting easy adaptability of the existing energy management systems to the very wide range of measuring devices currently existing and which might appear in the future.

### DESCRIPTION OF THE INVENTION

It is an object of the present invention to solve the problems of prior art described above by means of a processing device for standardization and abstraction of registers measured by a plurality of physical measuring devices which measure values of registers representing supplies selected from among at least electrical supplies, fuel supplies, water supplies, heating supplies, cooling supplies and combinations thereof, in locations of at least a building or at least an installation to which supplies are made by means of supply devices, where each measuring device comprises an set of memory positions, from which measured registers of physical magnitudes can be queried, the system comprising receptor means for measured registers and processing means for measured registers that are received, in order to generate processed registers that are storable in a storage database of processed registers, whose characteristics are detailed below.

Tthe processing system according to the invention comprises a database of characteristics schemes comprising characteristics schemes of respective models of measuring devices, and a database of category maps which comprise a set of category maps comprising assignment tables for category variables, selected from among electrical category, water category, thermal category, fuel category and independent category variables, along with a table of functioning modes.

Each characteristics scheme for each model of measuring device comprises at least one module allotted to at least one memory position of a measuring device model, and at least one submodule allotted to said module on the basis of its functioning mode. Each submodule is associated with a single measuring point and assigned to at least one category map, and in each category map a submodule is related to at least one category variable. The modules do not have category, nor do the submodules in themselves since it are the category maps that have category. A submodule can have more than one category map in such a way that it can belong to more than one category. For example, the memory register of a measuring device being a pulse counter, which can be read in a particular physical position of the measuring device, can only measure pulses. The pulse counter does not know if they are cubic meters of water, liters of fuel or kWh of electrical consumption, in such a way that that physical memory register will belong to a module and in turn to a submodule. The submodule will then be associated with various category maps, one per category, since the pulses can measure things that are in any of the categories.

The table of functioning modes comprises at least one submodule for each functioning mode of the module which can by itself constitute a measuring point of a category of measured register.

The processing system also comprises processing means that comprise mapping means, assignment means and transformation means.

The assignment means are designed for assigning to each measured register read in the memory position of the physical measuring device corresponding to a submodule, the category variable with which the submodule is related in the assignment table.

The transformation means are provided for transforming values of each measured register read in the memory position corresponding to the submodule to which the category variable has been assigned, into values of processed registers, expressed in the pre-established equivalent unit of measurement assigned to the submodule by the corresponding category, map.

The category map relates the physical positions of the devices, such as might be the address identified by a hexadecimal number 0xFF80, with a "real" variable with intrinsic meaning, such as might be an energy or an electrical power whose units are already defined outside of the actual category map (for example kWh, kW, Volts V, Amps A). The category map is responsible for interconnecting the two worlds, the physical one of the device and the one of the commonly used variables known as Category Variables.

By means of these characteristics, the processing system of the present invention allows the concept of measuring point to be dissociated from the physical measuring device, in such a way that a measuring device can be the origin of various measuring points depending on the submodules and functioning modes of the chosen modules. It must also be observed that the measured registers of the measuring device do not as such belong to any category of measurement, since it are the mapping means which, on the basis of the categories map, relate the blocks of registers/submodules with the category variables in a standardized way, applying a function to them according to the measuring device. The submodules may contain one or more category maps, depending on whether they are able to belong to one or more categories of variables.

In accordance with a preferred embodiment of the invention, the processing system furthermore comprises an installation map and reading means for the measured registers.

In the installation map, each measuring device is identified by a device model identification code, a location code and a measuring point code for each submodule allotted to each physical position of the measuring device. In this case the processing means also comprise routing means for routing, on the basis of the codes of the installation map, measurement queries regarding the values of measured registers allotted to each submodule assigned to one or several physical positions of the memory map of the measuring device. The response reading means read the responses to each query in the form of data representing the values of the registers measured in each submodule.

The processing means of the processing system can comprise grouping means designed for grouping into the same processed register values of processed registers originating from a plurality of measured registers assigned to the same category of measured register.

The elements included in the processing system can be housed in a server, in a local unit, or distributed between the server and the local unit.

Thus, the database of characteristics schemes is housed in a remote server, and/or the database of category maps and/or the assignment means are housed in a remote server and/or the transformation means are housed in a remote server.

Likewise, the routing means and the response reading means can be programmed in the remote server. Alternatively, or complementarily, the routing means can be programmed in the remote server in which case the response reading means are programmed in a separate local unit.

The process of creating a functioning scheme starts by compiling the table of memory positions (physical memory map) of the physical measuring device to be integrated. It is checked whether all registers that they measure can be separated into modules that will never belong to the same measuring point, in other words, whether for example measurements can be considered as belonging to different categories such as electrical category, water category and gas category, and can represent a measuring point in themselves, in other words, a NON-physical measuring point. It has to be emphasized that a measured register of the memory table of the device can only belong to a single module, never to more than one.

Next, for each module, it is assessed conceptually whether it can have more than one functioning mode. The functioning modes indicate how the subdivision of the module into submodules will be. In other words, the number of modes of a module represents the number of ways of subdividing the module into submodules. For example, for Mode 1 a module can have a single submodule (S11) and for Mode 2 it can have 3 submodules (S21, S22, S23). It can be seen that a register of a module can belong to more than one submodule, though at all times these will be submodule of different modes, in other words, it belongs to as many submodule as there are functioning modes of the module.

Then, for each functioning mode, as with the first step, a study is made of the subdivision of the module into submodules (and as with the first step, a submodule represents a measuring point in itself).

After having it divided into submodules, for each submodule this stage consists in analyzing how many categories it can belong to. A submodule can belong to a single category, for example the electrical category if the variables refer to aspects of electrical energy, or to several categories if it is a pulse counter for example.

The final stage is to create the category map for each Submodule-Category pair, since the category maps are the ones which relate the submodules to the category variables. These category maps have as a property the category which they "point" at.

In accordance with the invention, the processing system is applicable to, for example, measuring devices capable of performing three-phase electrical measurements, such as the measuring device EM24-DIN manufactured by the Italian company CARLO GAVAZZI whose table of memory positions is reproduced below:

**Table of memory positions of the device EM24 DIN from CARLO GAVAZZI**

| **Modicom address** | **Physical address** | **Length (words)** | **VARIABLE ENG. UNIT** | **Data format** | **Notes** |
|---|---|---|---|---|---|
| 300001 | 0000h | 2 | V L1-N | INT32 | Value weight: Volts*10 |
| 300003 | 0002h | 2 | V L2-N | INT32 | |
| 300005 | 0004h | 2 | V L3-N | INT32 | |
| 300007 | 0006h | 2 | V L1-L2 | INT32 | |
| 300009 | 0008h | 2 | V L2-L3 | INT32 | |
| 300011 | 000Ah | 2 | V L3-L1 | INT32 | |
| 300013 | 000Ch | 2 | A L1 | INT32 | Value weight: Amps*1000 |
| 300015 | 000Eh | 2 | A L2 | INT32 | |
| 300017 | 0010h | 2 | A L3 | INT32 | |
| 300019 | 0012h | 2 | W L1 | INT32 | |
| 300021 | 0014h | 2 | W L2 | INT32 | Value weight: Watts*10 |
| 300023 | 0016h | 2 | W L3 | INT32 | |
| 300025 | 0018h | 2 | VA L1 | INT32 | |
| 300027 | 001 Ah | 2 | VA L2 | INT32 | Value weight: VA*10 |
| 300029 | 001 Ch | 2 | VA L3 | INT32 | |
| 300031 | 001 Eh | 2 | VAR L1 | INT32 | |
| 300033 | 0020h | 2 | VAR L2 | INT32 | Value weight: var*10 |
| 300035 | 0022h | 2 | VAR L3 | INT32 | |
| 300037 | 0024h | 2 | V L-N Σ | INT32 | Value weight: Volts*10 |
| 300039 | 0026h | 2 | VL-L Σ | INT32 | |
| 300041 | 0028h | 2 | W Σ | INT32 | Value weight: Watts*10 |
| 300043 | 002Ah | 2 | VA Σ | INT32 | Value weight: VA*10 |
| 300045 | 002Ch | 2 | VAR Σ | INT32 | Value weight: var*10 |
| 300047 | 002Eh | 2 | DMD W Σ | INT32 | Value weight: Watts*10 |
| 300049 | 0030h | 2 | DMD VA Σ | INT32 | Value weight: VA*10. |
| 300051 | 0032h | 1 | PF L1 | INT16 | Negative values correspond to the cable (C), a positive value corresponds to lag(L) Value weight: PF*1000 |
| 300052 | 0033h | 1 | PF L2 | INT16 | |
| 300053 | 0034h | 1 | PF L3 | INT16 | |
| 300054 | 0035h | 1 | PF L Σ | INT16 | |
| 300055 | 0036h | 1 | Phase sequence | INT16 | The value -1 corresponds to the sequence L1-L3-L2, the value 0 corresponds to the sequence L1-L2-L3 (this values is meaningful in the case of three-phase systems) |
| 300056 | 0037h | 1 | Hz 1 | INT16 | Value weight: Hz*10 |
| 300057 | 0038h | 2 | DMD W Σ max. | INT32 | Value weight: Watts*10 |
| 300059 | 003Ah | 2 | DMD VA Σ max. | INT32 | Value weight: VA*10 |
| 300061 | 003Ch | 2 | DMD A max. | INT32 | Value weight: Amps*1000 |
| 300063 | 003Eh | 2 | KWh(+) TOT | INT32 | Value weight: kWh*10 |
| 300065 | 0040h | 2 | Kvarh(+) TOT | INT32 | Value weight: kvarh*10 |
| 300067 | 0042h | 2 | KWh(+) PAR | INT32 | Value weight: kWh*10 |
| 300069 | 0044h | 2 | Kvarh(+) PAR | INT32 | Value weight: kvarh*10 |
| 300071 | 0046h | 2 | KWh(+) L1 | INT32 | Value weight: kWh*10 |
| 300073 | 0048h | 2 | KWh(+) L2 | INT32 | Value weight: kWh*10 |
| 300075 | 004Ah | 2 | KWh(+) L3 | INT32 | Value weight: kWh*10 |
| 300077 | 004Ch | 2 | KWh(+) T1 | INT32 | Value weight: kWh*10 |
| 300079 | 004Eh | 2 | KWh(+) T2 | INT32 | Value weight: kWh*10 |
| 300081 | 0050h | 2 | KWh(+) T3 | INT32 | Value weight: kWh*10 |
| 300083 | 0052h | 2 | KWh(+) T4 | INT32 | Value weight: kWh*10 |
| 300085 | 0054h | 2 | Kvarh(+) T1 | INT32 | Value weight: kvarh*10 |
| 300087 | 0056h | 2 | Kvarh(+) T2 | INT32 | Value weight: kvarh*10 |
| 300089 | 0058h | 2 | Kvarh(+) T3 | INT32 | Value weight: kvarh*10 |
| 300091 | 005Ah | 2 | Kvarh(+) T4 | INT32 | Value weight: kvarh*10 |
| 300093 | 005Ch | 2 | Kvarh(-) TOT | INT32 | Value weight: kWh*10 |
| 300095 | 005Eh | 2 | KWh(-) TOT | INT32 | Value weight: kvarh*10 |
| 300097 | 0060h | 2 | Time | INT32 | Value weight: time*100 |
| 300099 | 0062h | 2 | Pulse counter 1 | INT32 | Value weight: eng. unit*10 |
| 300101 | 0064h | 2 | Pulse counter 2 | INT32 | Value weight: eng. unit*10 |
| 300103 | 0066h | 2 | Pulse counter 3 | INT32 | Value weight: eng. unit*10 |

As can be seen, the EM24-DIN measuring device comprises a number of positions at which registers referring to physical magnitudes of electrical category can be read and three positions at which pulse counter registers can be read.

It can be seen that the pulse counters can measure any physical magnitude that can be quantified by pulses, in such a way that each pulse represents a specific quantity of that accumulable magnitude.

In this way, for this measuring device a division into two modules can be established, namely, a module that includes the variables of the addresses 0000h - 005Eh corresponding to electrical physical magnitudes (the category maps of the submodules of this module will always be electrical category), and the module corresponding to the pulse counters whose registers can be read at the positions 0062h, 0064h and 0066h.

Thus, in accordance with the present invention, the measuring device is converted into two modules, namely, an electrical category module and pulse counter module. The pulse counter module has two functioning modes, one mode which comprises the three counters in one single submodule and another mode in which each counter is converted into a submodule on its own. In the same way the electrical category module has two functioning modes, three-phase mode and one-phase mode. In the three-phase mode, the module has one single submodule containing all the electrical type registers that are of interest. In the one-phase mode, it will have three submodules, one for each phase. The submodules belonging to the electrical category mode will have a single category map in which it links them with the electrical category variables. On the other hand, the submodules of the pulse counters will have several category maps, one for each category.

As an illustrative example of some parts of the characteristics schemes which the processing system contains in accordance with the invention for the physical measuring device EM24-DIN, the following can be stated:
Electrical Mode category maps:
Submodule S111 (Module 1 Mode 1 Three-phase, Submodule 1) - Electrical Category Map

| Physical address | Category Variable ID | Name |
|---|---|---|
| 003Eh | 1 | System Active Energy |
| 0046h | 11 | Phase 1 Active Energy |
| 0048h | 12 | Phase 2 Active Energy |
| 004Ah | 13 | Phase 3 Active Energy |

Submodule S123 (Module 1 Mode 2 One-phase, Submodule 3) - Electrical Category Map

| Physical address | Category Variable ID | Name |
|---|---|---|
| 004Ah | 1 | System Active Energy |
| DOES NOT EXIST! | 11 | Phase 1 Active Energy |
| DOES NOT EXIST! | 12 | Phase 2 Active Energy |
| DOES NOT EXIST! | 13 | Phase 3 Active Energy |

It can be depicted that for the case of three-phase mode, the "System Active Energy" Category variable is related to the physical register 003Eh since the system is regarded as three-phase.

On the other hand, in the category map for the submodule S23, the "System Active Energy" variable is related to the physical register 004Ah, which in the other category map was "Phase 3 Active Energy". This is due to the fact that in one-phase mode that energy is the energy of the entire system (known as "measuring point") and for that reason each "Active Energy" category variable of phase 1, 2 and 3 is not used in the category maps of the submodules belonging to the one-phase mode, nor the physical register 003Eh which measures the energy of a three-phase system which in this case does not apply.

### Pulse Counter Module category maps 1:

Submodule S211 (Module 2 Mode 1 Standard, Submodule 1) - Electrical Category Map

| Physical address | Category Variable ID | Name |
|---|---|---|
| 0062h | 1 | System Active Energy |
| 0064h | 2 | System Reactive Inductive Energy |
| 0066h | 3 | System Reactive Capacitive Energy |

Submodule S211 (Module 2 Mode 1 Standard, Submodule 1) - Fuel Category Map

| Physical address | Category Variable ID | Name |
|---|---|---|
| 0062h | 31 | Fuel Volume |
| 0064h | 32 | Fuel Energy Generated |
| 0066h | 33 | Fuel Leaks |

Submodule S223 (Module 2 Mode 2, Submodule 3) - Water Category Map

| Physical address | Category Variable ID | Name |
|---|---|---|
| 0062h | 41 | Water Volume |

Submodule S223 (Module 2 Mode 2, Submodule 3) - Fuel Category Map

| Physical address | Category Variable ID | Name |
|---|---|---|
| 0062h | 31 | Fuel Volume |

As can be seen, these category maps are complete and there exists one per category for the pulse counter submodules. The physical register does not change; what changes the category map is the meaning assigned to the count performed by that counter. There are many things that can be measured by pulses, such as for example the volume of liquids, electrical energy, counting of people, etc. For that reason, pulse counters have a category map for each category because they can measure things from all categories.

### BRIEF DESCRIPTION OF THE FIGURES

Figure 1 is a block diagram of an embodiment of the processing system in accordance with the present invention;
Figure 2 is a block diagram of an embodiment of the processing system of figure 1;
Figure 3 is a block diagram of an embodiment of the processing means of the processing system of figure 1;
Figure 4 is a block diagram of individual embodiments of the two characteristics schemes in accordance with the invention;
Figure 5 is a flow diagram of the processing of a register query made of a measuring device.

In these figures the following numbers are assigned to the given elements.
- 1: Measuring device
- 1a: Measured register
- 2: Supply device
- 3: Processing system
- 4: Receptor means
- 5: Processing means for registers
- 5a: Processed register
- 6: Storage database
- 7: Database of characteristics scheme
- 7a: Characteristics scheme
- 8: Database of category maps
- 8a: Category maps
- 8A: Category variable
- 9: Module
- 9a: Modules table
- 10: Submodule
- 11: Mapping means
- 12: Assignment means
- 13: Transformation means
- 14: Remote server
- 15: Installation map
- 16: Assignment table
- 17: Functioning modes table
- 17a: Functioning mode
- 18: Memory positions table
- 18a: Memory position
- 19: Reading means
- 20: Grouping means
- 21: Routing means
- 22: Query command
- X: Identification code
- Y: Location code
- Z: Measuring point code

### MODES OF EMBODIMENT OF THE INVENTION

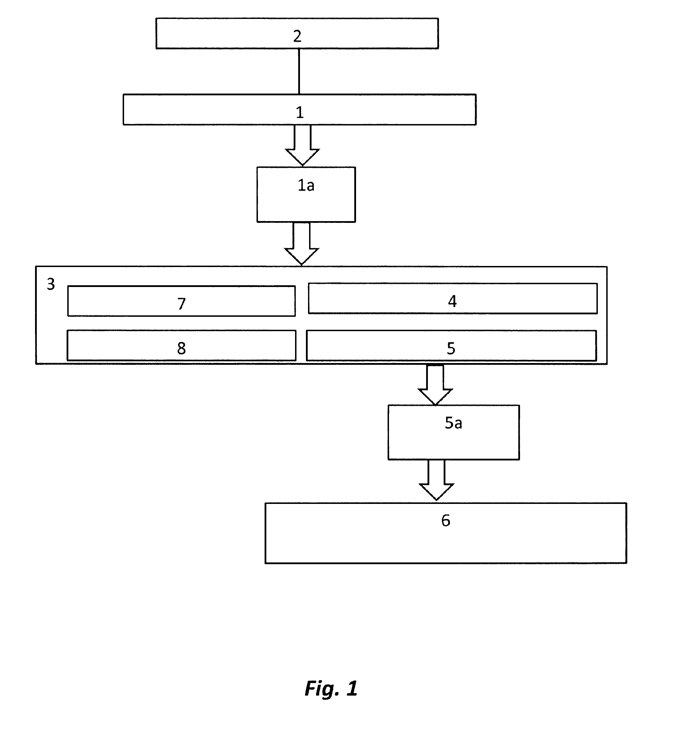

In accordance with what is disclosed by the block diagram illustrated in figure 1, the processing system (3) for standardization and abstraction of registers comprises receptor means (4) of measured registers (1a), a category maps database (8), processing means (5) of the measured registers (1a) for generating processed registers (5a) and a storage database (6) of processed registers.

The receptor means (4) of the processing system (3) receive measured registers (1a) from a measuring device (1), identified by a location code (Y), which is connected to a supply device (2). These measured registers (1a) are processed with the aid of register processing means (5) and the database of category maps (8), in such a way that the processing system (3) generates the processed registers (5a) corresponding to the measured registers (1a).

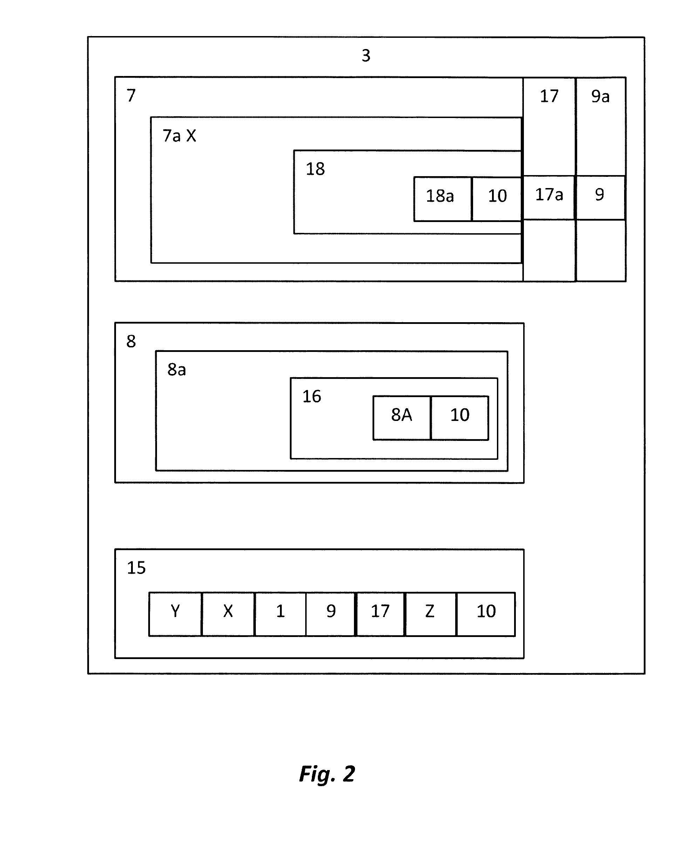

Figure 2 shows a diagram of an embodiment of the processing system for registers (3) illustrated in figure 1, in which the database of category maps (8) and the database of characteristics schemes (7) are integrated.

The characteristics schemes database (7) comprises individual characteristics schemes (7a) of plurality of measuring device models (1). Each characteristics scheme (7a) comprises an identification code (X) for each measuring device model (1) and a memory positions table (18) which identifies the memory positions (18a) of each measuring device model (1).

The processing system (3) furthermore comprises a modules table (9a), an assignment table (16) of category variables (8A), a functioning modes table (17) and an installation map (15).

Each identification code (X) identifies a measuring device model (1), for example a pulse counter for electricity or water, a flowmeter for fluids such as gas, water or fuel, a thermometer or humidity sensor, of a certain model and from a certain manufacturer.

The memory positions table (18) identifies physical positions (18a) of a physical memory from which the measuring device model (1), identified by the identification code (X), is able to deliver respective measured registers (1a) along with the type of physical magnitude of each kind of measured register (1a).

In this memory positions table (18), each memory position (18a) is assigned to a module (9) via a submodule (10). Each module (9) is assigned to a category of registers of measured physical magnitudes which can by themselves constitute a measuring point, for example, electricity or water consumption, the flow of gas, water or fuel, temperature or humidity.

With respect to each module (9), the functioning modes table (17) comprises at least one submodule (10) for each functioning mode (17a) of the module (9) which can by itself constitute a measuring point of a category of measured register (1a). For example, a pulse counter can measure electricity consumption, water consumption or gas consumption, in such a way that, depending on the supply device (2) to which it is connected, the pulse counter can operate as a measuring device for electricity, water or gas and issue measured registers (1 a) representing consumption values in physical magnitudes expressed in certain units of measurement.

The assignment table (16) for category variables relates the units of measurement of the physical magnitudes of the measured registers (1a) in each submodule (10) with category variables (8A). Thus, in the assignment table (16), each submodule (10) of the category maps database (8) is assigned to at least one category variable (8A), by means of which the physical magnitudes of the measured registers (1a) allotted to each submodule (10) can be transformed into values expressed in respective pre-established equivalent units of measurement.

In the installation map (15), each measuring device (1) is identified by its identification code (X), a location code (Y) and a measuring point code (Z) assigned to one of the submodule (10) identified in the physical memory positions table (18) of the measuring device (1). In thins way, the installation map (15) permits one to know in which locations the different measuring devices (1a) are installed, what the measuring point is, which physical magnitudes are measured at each measuring point and which measuring device model (1) is in each location.

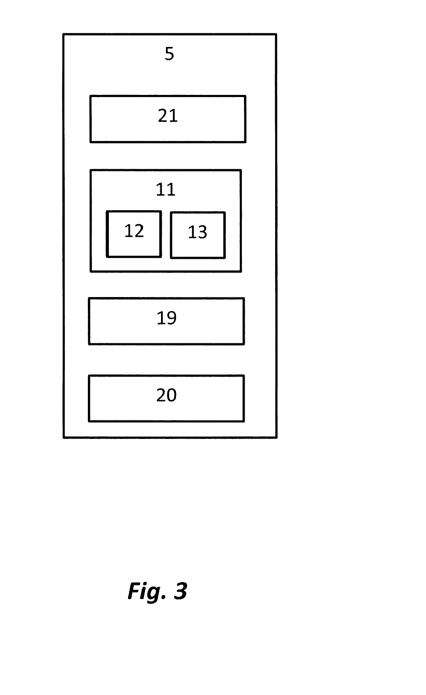

In the embodiment illustrated in the block diagram of figure 3, the register processing means (5) comprise mapping means (11) which in turn comprise assignment means (12), transformation means (13) and which also comprise reading means (19) and grouping means (20).

The assignment means (12) are intended for assigning to each measured register (1a) the category variable stated in the assignment table (16) corresponding to the submodule (10) allotted to the physical memory position of the physical device (1), while the transformation means (13) are intended for transforming values of each measured register (1 a) to which the category variable has been assigned into values of processed registers (5a) expressed in the pre-established equivalent unit of measurement assigned to the corresponding submodule (10). In this way, the values of the measured registers (1a) that are queried in different measuring device models (1), such as for example electricity consumption which can be measured by electromechanical or electronic pulse counters and which can emit their measurements in different units, are transformed into values of processed registers (5a) expressed in pre-established units of measurement by the assignments made by the category maps (8) which relate the category variables with the physical positions of the physical measuring devices (1). This allows for processing, for example, summing, combining and/or breaking down the values of the registers of a single category measured by devices of different models of measuring devices (1 a) in such a way that they are stored in the storage database (6) for processed registers (5a) in a standardized manner.

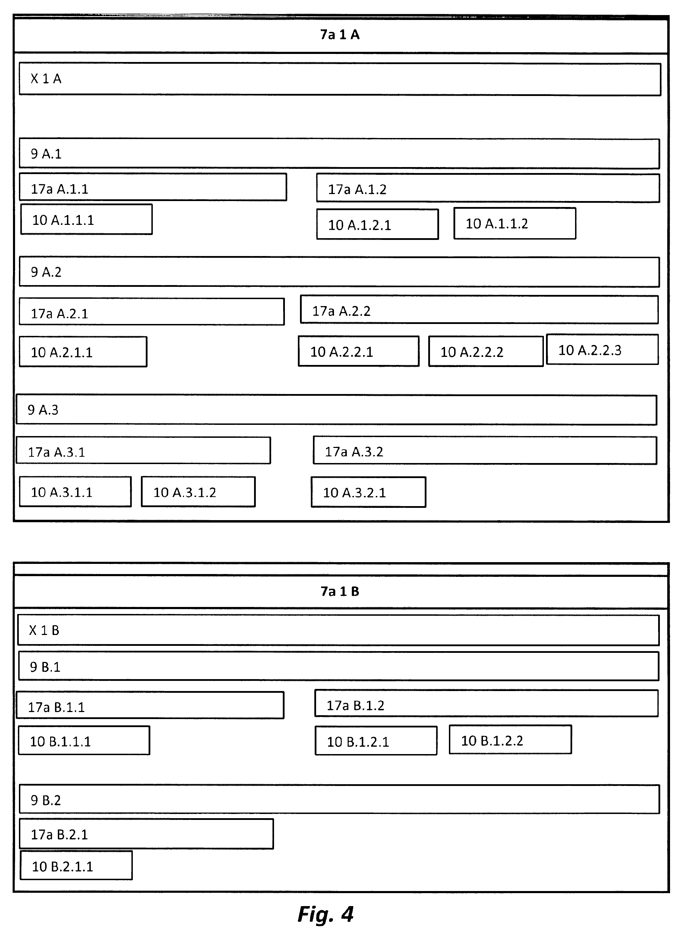

Figure 4 shows in diagrammatic form two characteristics schemes (7a) of respective models of measuring device (1), model A and model B, identified by individual identification codes (X).

The characteristics schemes (7a) relating to the measuring device (1) model A refers to the characterization of the groups of memory positions, A1, A2 and A3, of the measuring device (1) model A, each of which refers to measured registers which will never belong to the same measuring point.

This can be due to the fact that, for example, one set of measured registers corresponds to physical magnitudes belonging to the electricity category for group A1, physical magnitudes belonging to the water category for group A2 and physical magnitudes which do not in advance belong to any category since their submodules (10) will have several category maps (8a). The memory positions corresponding to groups A1, A2 and A3 are divided into module A.1, module A.2 and module A.3, in other words, each group represents a module (9).

Module A.1 can operate in two functioning modes (17a), A.1.1 and A.1.2, and in each functioning mode (17a) it is subdivided distinctly into submodules (10), in such a way that module-mode A.1.1 is divided into a single submodule A.1.1.1 and te module-mode A.1.2 is divided into two submodules, A.1.2.1 and A.1.2.2.

Module A.2 can also operate in two functioning modes (17a), A.2.1 and A.2.2. In the functioning mode (17a) A.2.1 it possesses just one submodule, A.2.1.1, while in the functioning mode (17a) A.2.2 it is divided into three submodules (10), submodule A.2.2.1, submodule A.2.2.2 and submodule A.2.2.3.

Module A.3 can also operate in two functioning modes (17a), A.3.1 and A.3.2. In the functioning mode (17a) A.3.1 it possesses two submodules (10), A.3.1.1 and A.3.1.2, while in the functioning mode (17a) A.3.2 it corresponds to a single submodule (10), the submodule, A.3.2.1.

In accordance with the invention, each submodule (10) is considered as a measuring point and is assigned at least one category map (8a), for example an electrical category map (8a) because all the memory positions of the physical measuring device (1) in that submodule (10) refer to electrical type magnitudes. Other submodules (10) can have assigned to them as many category maps (8a) as there are physical magnitudes of the physical measured registers (1a) that can be read in a memory position of the measuring device (1), as is the case with, for example, pulse counters.

The characteristics scheme (7a) relating to the measuring device (1) model B refers to the characterization of two groups of memory positions, B1 and B2, of the memory positions table (18) of the measuring device (1) model B, and each one refers to measured registers (1a) of a category of physical magnitudes that are measured, for example, physical magnitudes belonging to the electricity category for the group B1, and physical magnitudes belonging to the water category for the group B2. Given that each of these groups refers to a different category of physical magnitudes, the memory positions corresponding to groups B1 and B2 therefore become converted into the modules B.1 of electricity category and B.2 of water category.

The module (9) of category B.1 can operate in two functioning modes (17a), B.1.1 and B.1.2, and in each functioning mode (17a) it can only emit measured registers (1a) on the basis of a physical magnitude type, in such a way that module (9) of category B.1 only possesses a single submodule (10), B.1.2.1 in mode B.1.1, while in mode B.1.2 it is divided, into two submodules (10), B.1.1.1 and B.1.1.2. Moreover, module B.2 only operates in one functioning mode (17a), B.2.1, in such a way that there is just a single submodule (10), the submodule B.2.1,1.

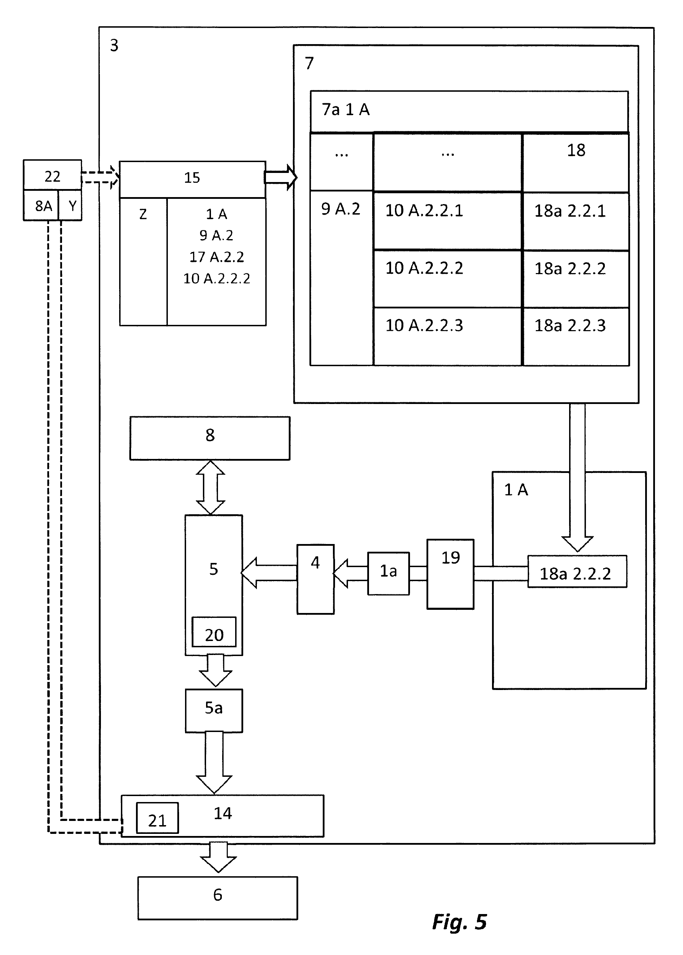

Figure 5 shows an example of the processing of a register query made of a measuring device (1) model A.

By routing means (21) suitable for routing, and on the basis of the location codes (Y) of the installation map (15), measurement queries are sent from a remote server (14) regarding the values of measured registers (1a) allotted to a submodule (10) of a memory position (18a) of the measuring device (1). A query command (22) is sent indicating that it is wished to read the register of a measuring device (1) for the electrical energy consumption of phase 1 of a supply device (2), such as for example an air conditioning appliance located on the third floor of a building. This sending is illustrated by means of a dashed arrow in figure 5. The query command (22) contains the category variable (8A) corresponding to the category of electrical energy of phase 1 and the location code (Y).

In the installation map (15) of the processing system (3), the measuring points are related to the physical measuring devices (1) and the submodule (10) allotted to this measuring point. In the example of figure 5, the installation map (15) relates the electricity consumption of an air conditioning appliance on the third floor with a measuring device (1) model A whose module A.2 comprises three submodules (10) A.2.2.1, A.2.2.2 and A.2.2.3. Of these, submodule (10), A.2.2.2 corresponds to the measuring point (Z) of the query command and to the location point (Y) of the measuring device (1) where the measured register is read and to which the query command (22) refers.

When the measuring device (1) and the submodule A.2.2.2 have been identified in the installation map (15), the processing system (3) locates in its characteristics schemes database (7) the characteristics scheme (7a) of the measuring device (1) model A and the memory position (18a) of the measuring device (1) model A that is assigned in the characteristics scheme (7a) to the submodule (10) A.2.2.2, and it detects the memory position (18a) 2.2.2 that has to be read on the basis of the positions table (18) of the measuring device (1) model A that corresponds to the measuring point code (Z) which in turn corresponds to the location code (Y) contained in the query message (22), in such a way that a read order is sent to that measuring device (18) in order to read the register measured in the position (18a), in such a way that the measured register (1a) that is obtained at that position is received by the receptor means (4) and transformed by the processing means (5), after querying the correspondence between the unit of measurement and the predetermined category variable in the database of category maps (8), into the corresponding processed register (5a) expressed in a value of the applicable category variable. This latter value is sent to the remote server (14) and from there to the processed registers storage database (6). It can be seen that, in the embodiment illustrated in this figure, the processing means (5) furthermore comprise grouping means (20) designed for grouping into a single group of processed registers (5a) the values of processed registers (5a) originating from an plurality of measured registers (1 a) assigned to the same category of measured register (1a).

## Claims

1. A processing system for standardization and abstraction of registers measured by a plurality of physical measuring devices (1) which measure values of measured registers (1a) representing supplies selected from among at least electrical supplies, fuel supplies, water supplies, heating supplies, cooling supplies and combinations thereof, in locations of at least a building or at least an installation to which supplies are made by means of supply devices (2), wherein each measuring device (1) comprises a set of memory positions from which measured registers (1a) of physical magnitudes can be queried, the processing system (3) comprising receptor means (4) for measured registers and processing means (5) for measured registers that are received in order to generate processed registers (5a) that are storable in a storage database (6) of processed registers, **characterized in that**:
the processing system (3) furthermore comprises a characteristics schemes database (7) comprising characteristics schemes (7a) of respective models of measuring devices (1), and a category maps database (8) which comprises plurality of category maps (8a) comprising assignment tables (16) of category variables;
each characteristics scheme (7a) of each model of measuring device (1) comprises at least , one module (9) and at least one submodule (10) assigned to said module (9) on the basis of its functioning mode;
each module (9) is allotted to at least one memory position of a measuring device (1) model, and associated with a single measuring point and assigned to at least one category map (8a);
in each category map (8a) a submodule (10) is associated with a category variable;
the processing means (5) furthermore comprise mapping means (11) which comprise assignment means (12) and transformation means (13);
the assignment means (12) are designed for assigning to each measured register (1a) read at the memory position of the physical measuring device (1) corresponding to a submodule (10), the category variable with which the submodule is related in an assignment table (16);
the transformation means (13) are intended for transforming values of each measured register (1a) read in the memory position (18a) corresponding to the submodule (10) to which the category variable has been assigned, into values of processed registers (5a) expressed in the pre-established equivalent unit of measurement assigned to the submodule (10) by the corresponding category map.

2. A processing system, in accordance with claim 1, **characterized in that** the database of characteristics schemes (7) is hosted in a remote server (14).

3. A processing system, in accordance with claim 1 or 2, **characterized in that** the database of maps (8) is hosted in a remote server (14).

4. A processing system, in accordance with claims 1, 2 or 3, **characterized in that** the assignment means (12) are hosted in a remote server (14).

5. A processing system, in accordance with claim 1, 2, 3 or 4, **characterized in that** the transformation means (13) are hosted in a remote server (14).

6. A processing system, in accordance with any of claims 1 to 5, **characterized in that** it comprises
an installation map (15) in which each measuring device (1) is identified by a measuring device model identification code (X), a location code (Y) and a measuring point code (Z) for each submodule (10) allotted to each physical position of the memory positions table (18) of the measuring device (1);
routing means (21) for routing, based the location codes (Y) of the installation map (15), measurement queries regarding the values of measured registers (1a) allotted to each submodule (10) of a physical position (18a) of the measuring device (1), and
reading means (19) of responses to the queries in the form of data representing the values of the measured registers (1a) in each submodule (10).

7. A processing system, in accordance with claim 6, **characterized in that** the routing means (21) and the response reading means (19) are programmed in a remote server (14).

8. A processing system, in accordance with claim 6, **characterized in that** the routing means (21) are programmed in a remote server (14) and **in that** the response reading means (19) are programmed in a separate remote server.

9. A processing system, in accordance with any of claims 1 to 8, **characterized in that** the register processing means (5) comprise grouping means (20) designed for grouping into the same group of processed registers (5a) values of processed registers (5a) originating from a plurality of measured registers (1a) assigned to the same category of measured register (1a).
